# NEUE EUROPÄISCHE PATENTSCHRIFT

(11) **EP 0 874 742 B2**
(45) Veröffentlichungstag und Bekanntmachung des Hinweises auf die Entscheidung über den Einspruch: **08.09.2004**
(45) Hinweis auf die Patenterteilung: 10.10.2001
(21) Anmeldenummer: 97901004.8
(22) Anmeldetag: 11.01.1997
(51) Int. Cl.: B60R 16/02

(54) **AN DEN LENKSTOCK BZW. AN DAS LENKRAD EINES KRAFTFAHRZEUGS ANBAUBARE INTEGRIERTE BAUGRUPPE**
INTEGRATED SUBASSEMBLY MOUNTABLE ON THE STEERING COLUMN OR ON THE STEERING WHEEL OF A MOTOR VEHICLE
ENSEMBLE INTEGRE POUVANT ETRE MONTE SUR LA COLONNE DE DIRECTION OU SUR LE VOLANT D'UNE AUTOMOBILE

(30) Priorität: 20.01.1996 DE 19602060
(43) Veröffentlichungstag der Anmeldung: 04.11.1998
(73) Patentinhaber: Valeo Schalter und Sensoren GmbH, 74321 Bietigheim-Bissingen (DE)
(72) Erfinder: STUMPE, Reinhard, D-73765 Neuhausen (DE); HECHT, Walter, D-74321 Bietigheim-Bissingen (DE); KLEIN, Rudolf, D-74348 Lauffen (DE)
(74) Vertreter: Dreiss, Fuhlendorf, Steimle & Becker
(86) Internationale Anmeldenummer: PCT/EP1997/000112
(87) Internationale Veröffentlichungsnummer: WO 1997/026154

(56) Entgegenhaltungen:
- EP-A- 0 675 023
- EP-A- 0 680 850
- DE-A- 19 515 423
- DE-C- 4 427 883
- DE-C- 4 428 883
- US-A- 4 867 688
- US-A- 5 314 344

## Beschreibung

In Kraftfahrzeugen werden immer mehr elektrische Schaltungen aufweisende Baugruppen verbaut, die der Sicherheit bzw. dem Komfort oder der Entlastung des Fahrers dienen sollen. ABS, Schlupfregelung, Giermomentenregelung sind hier Beispiele. Elektronische Baugruppen machen somit einen immer höheren Fertigungs- und Preisanteil an den Fahrzeugen aus. Man ist daher bemüht, zur Verminderung des Herstellungs- und Montageaufwandes immer mehr Baugruppen miteinander zu integrieren.

Im Bereich des Lenkrades bzw. des Lenkstocks eines Fahrzeugs sind neben den schon bekannten Lenkstockschaltern Einrichtungen zur Beheizung des Lenkrades, der Airbag, die Warnblinkanlage, Lenkwinkelsensor und die Übertragungseinrichtung zur Stromversorgung der an dem sich drehenden Lenkrad angeflanschten Baugruppen durch die chassisfeste Stromversorgung hinzugekommen. Die entsprechenden Baugruppen werden von unterschiedlichen Herstellern in getrennten Gehäusen geliefert, die dann aufeinandergestapelt und mechanisch sowie elektrisch miteinanderverbunden werden. Hierdurch ergeben sich eine ganze Reihe von mechanischen und elektrischen Schnittstellen, die nicht nur teuer in der Fertigung und Herstellung sind, sondern die auch vergleichsweise viel Platz benötigen und erheblichen Aufwand in der Abstimmung und Tolerierung der einzelnen Baugruppen erfordern.

Eine Baugruppe gemäß dem Oberbegriff des Anspruchs 1 ist aus DE-A 195 15 423 bekannt.

Aufgabe der Erfindung ist es daher, Maßnahmen vorzuschlagen, die die Herstellung und den Montageaufwand der im Bereich des Lenkstocks bzw. des Lenkrades verbauten Baugruppen vereinfachen.

Die Aufgabe wird durch die sich aus dem kennzeichnenden Teil des Anspruchs 1 ergebende Merkmalskombination gelöst. Die Erfindung besteht im Prinzip darin, die Übertragungseinheit und den Lenkwinkelsensor baulich miteinander zu vereinen, indem ein Gehäuseteil der Stromübertragungseinheit gleichzeitig ein Gehäuseteil des Lenkwinkelsensors bildet. Bei einer Integration kann man prinzipiell derart vorgehen, daß sowohl die drehbare Code-Scheibe als auch der drehbare Dekkel der Stromübertragungseinheit jeweils in einer Gehäusehälfte unverlierbar gelagert sind und daß dann die beiden Gehäusehälften mit den einander zugewandten Drehteilen verschlossen werden, so daß sie in einem nach außen abgeschlossenen gemeinsamen Gehäuse untergebracht sind. Hierbei ist allerdings zu beachten, daß der Antrieb der drehend anzutreibenden Bauelemente, die Code-Scheibe und Anschlußeinrichtung für Airbagkontakte über die zylinderförmige Mittelöffnung der Baugruppen im Bereich des Lenkstocks erfolgen muß. Um hier genug Platz für die mechanischen und elektrischen Schnittstellen der Stromübertragungseinheit zu haben, schlägt die vorliegende Erfindung die sich aus dem kennzeichnenden Teil des Anspruchs 1 ergebende Merkmalskombination vor. Die Erfindung besteht im Prinzip also darin, die einzelnen Einheiten wie Stromübertragungseinheit und Lenkwinkelsensor übereinander zu setzen, so daß der Deckel der einen Einheit gleichzeitig zumindest einen Teil des Bodens der darüberliegenden Einheit bildet. Das erfinderische System erlaub darüber hinaus die volle Freiheit, ob tatsächlich alle zu dem System gehörenden Einheiten tatsächlich eingebaut werden. So ist es beispielsweise möglich, die Stromübertragungseinheit auch ohne den Lenkwinkelsensor zu verbauen, indem nurein geeignetes Bodenteil anstatt des Lenkwinkelsensors angesetzt wird. Da damit zu rechnen ist, daß zur erleichterten Bedienbarkeit der Instrumente und zur Verbesserung der Sicherheit des Fahrzeugs immer mehr Baneinheiten in das Lenkrad integriert werden, wird bevorzugt, daß die Stromübertragungseinheit sich unmittelbar an das Lenkrad anschließt. Die folgenden Baueinheiten können dann wahlweise an die Übertragungseinheit angekoppelt werden, wobei zusätzlich zum oder anstatt des Lenkwinkelsensors ein Lenkstockschalter an die Stromübertragungseinheit angekoppelt wird.

Um die Baueinheiten zentral zum Lenkstock anordnen zu können, empfiehlt sich in Weiterbildung der Erfindung die aus Anspruch 2 sich ergebende Merkmalskombination. Die einzelnen Baneinheiten haben dabei im wesentlichen die Form von hohlen Ringkörpern, die ineinander verschachtelt sein können, aber auch einfach übereinandergesetzt werden können. Soweit der Gehäusedeckel gegenüber dem darunter befindlichen Gehäuseboden drehbar sein muß, wie dies beispielsweise bei dem Deckel der Stromübertragungseinheit der Fall ist, sollte die Verrastung so gewählt werden, daß der Deckel gegenüber dem Boden drehbar bleibt. Dies kann beispielsweise dadurch geschehen, daß in dem Deckel eine umlaufende Nut vorgesehen ist, in die ein entsprechender Ansatz des Bodens einrastet.

Gemäß Anspruch 3 ist es relativ einfach möglich, die Code-Scheibe durch das Lenkrad direkt anzutreiben. Soweit der Gehäusedeckel durch den Deckel der Stromübertragungseinheit gebildet wird, wird hierdurch eine doppelte Funktion erreicht, indem zum einen der Deckel als mechanische und elektrische Schnittstelle zum Lenkrad dient und indem er zum anderen gleichzeitig die Code-Scheibe des darunterliegenden Lenkwinkelsensors als zweiter Baueinheit antreibt. Als Merkmalskombination nach Anspruch 4 kann zusätzlich zum Lenkwinkelsensor ein Lenkstockschalter in die Baugruppe als Baueinheit eingefügt sein. Auch der Lenkstockschalter besitzt Elemente, welche durch die Drehbewegung des Lenkrades betätigbar sind, wie beispielsweise der Rückstellnocken der Blinkerrückstellung. Die Wirkungsweise eines derartigen Rückstellvorgangs ist beispielsweise in der DE-A-44 18 328 beschrieben. Damit kann beispielsweise der Deckel der Stromübertragungseinheit nicht nur die Code-Scheibe des Lenkwinkelsensors sondern auch noch den Rückstellnocken des Lenkstockschalters antreiben. Es ist dabei zu empfehlen, daß die Ausgestaltung der Gehäuseteile derart aufeinander abgestimmt ist, daß durch die Lasche der Stromübertragungseinheit entweder sowohl die Code-Scheibe des Lenkwinkelsensors als auch der Rückstellnocken des Lenkstockschalters angetrieben werden oder aber, falls das Fahrzeug keinen Lenkwinkelsensor benötigt, der Lenkwinkelsensor weggelassen wird und ohne bauliche Änderung der Stromübertragungseinheit diese nur den Rückstellnocken des Lenkstockschalters antreibt. Im Ergebnis bedeutet das, daß der Gehäusedeckel des Lenkstockschalters die gleiche Konfiguration wie der Deckel des Lenkwinkelsensors haben sollte, so daß Lenkwinkelsensor und Lenkstockschalter gegenüber der Stromübertragungseinheit austauschbar sind.

Entsprechend der Merkmalskombination nach Anspruch 4 hat es sich bewährt, den Lenkstockschalter unterhalb des Lenkwinkelsensors und der Stromübertragung anzuordnen.

Den synchronen Antrieb der durch das Lenkrad zu betätigenden Bauelemente der einzelnen Baueinheiten läßt sich durch die aus Anspruch 5 ergebende Merkmalskombination erheblich vereinfachen. Im Ergebnis läßt sich das geschilderte Merkmal dadurch verwirklichen, daß eine einzige Betätigungslasche sowohl die Code-Scheibe des Lenkswinkelsensors als auch den Rückstellnocken des Lenkstockschalters antreibt.

Ein Ausführungsbeispiel der Erfindung wird nachfolgend anhand der Zeichnung erläutert. Darin zeigt:
- Fig. 1: eine Draufsicht auf eine zwei Baueinheiten aufweisende integrierte Baugruppe
- Fig. 2: einen Schnitt durch die Baugruppe nach Fig. 1
- Fig. 3: eine perspektivische, von unten gesehene Ansicht der Baugruppe nach Fig. 1 und
- Fig. 4 bis 6: die Baugruppe in Draufsicht, Seitenansicht und Sicht von unten nach Fig. 1.

Die in dem Ausführungsbeispiel beschriebene, aus zwei Baueinheiten bestehende Baugruppe wurde hinsichtlich der Baueinheit Lenkwinkelsensor ausführlich in der DE-A-196 01 964 beschrieben und soll daher an dieser Stelle nur so weit erläutert werden, wie es hinsichtlich der erfinderischen Integration der einzelnen Baueinheiten notwendig ist.

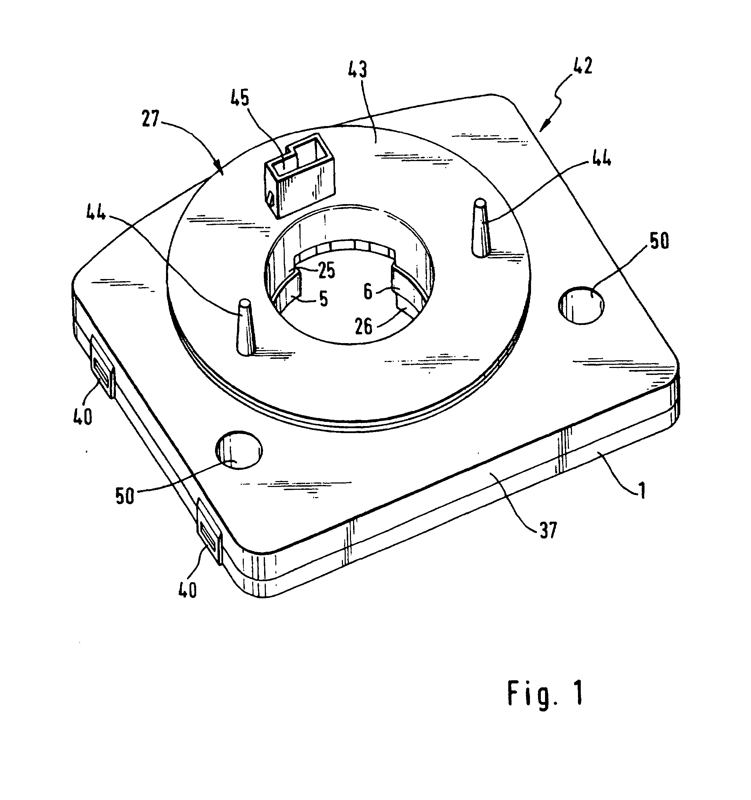

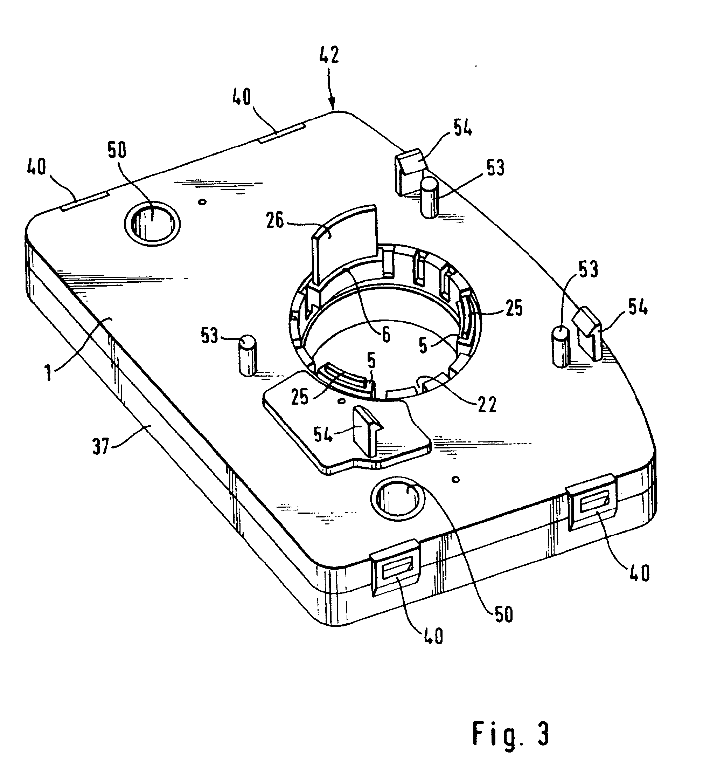

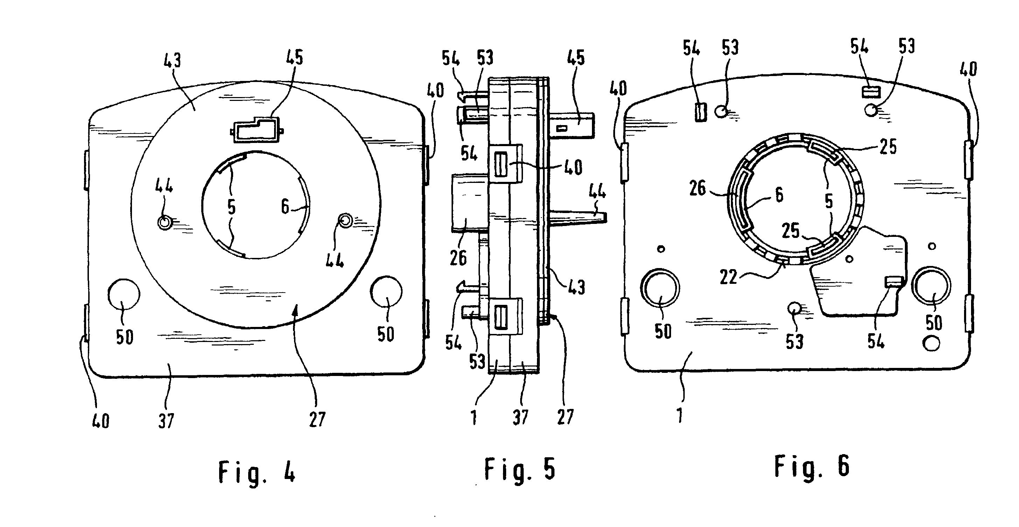

Die Baueinheit nach Fig. 1 bis 6 besteht aus einer Übertragungseinheit 27 und einem Lenkwinkelsensor 42, deren Gehäuseteile ineinandergefügt sind. Der Gehäusedeckel 43 der Übertragungseinheit 27 besitzt zwei Antriebsstifte 44, die direkt mit dem Lenkrad gekoppelt sind, so daß der Gehäusedeckel 43 der Drehbewegung des Lenkrades folgt. Eine elektrische Verbindung zwischen dem nicht dargestellten Airbag im Len k-rad und dem Gehäusedeckel 43 schafft ein Airbagstekker 45.

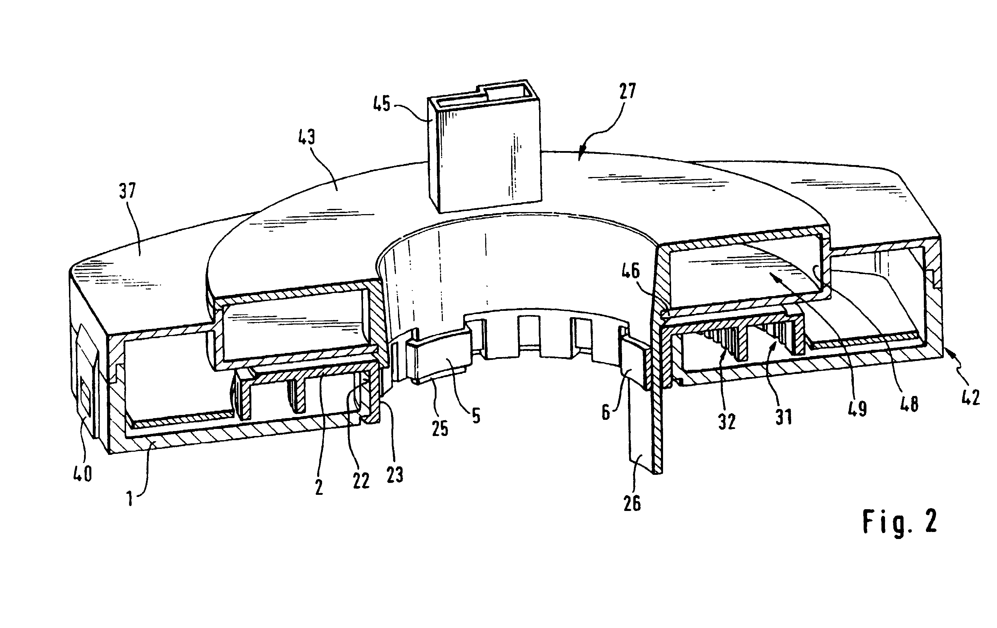

Der Gehäusedeckel 43 sitzt oberhalb des Gehäusedeckels 37 für den Lenkwinkelsensor 42, wobei der Gehäusedeckel 37 gegenüber dem Chassis des Fahrzeugs fest montiert ist. Dagegen ist der Gehäusedeckel 43 gegenüber dem Gehäusedeckel 37 drehbar. Die drehbare Lagerung geschieht mit Hilfe einer drehbaren Rastverbindung 46, bei der eine umlaufende Nut in einer Ringwand des Gehäusedeckels 43 mit einem entsprechenden Vorsprung am Gehäuse 37 des Lenkwinkelsensors 42 zusammenwirkt. Für die Erfindung wichtig ist, daß der Gehäusedekkel 37 des Lenkwinkelsensors 42 eine Ringausnehmung 48 besitzt, welche mit dem Deckel 43 einen Ringraum 49 schafft, welcher zur Aufnahme einer Wickelfeder oder einer Schleifkontakteinrichtung der Übertragungseinheit 27 dienen kann. Es zeigt sich also, daß der Deckel 37 des Lenkwinkelsensors zumindest teilweise den Boden des Ringraums für die Übertragungseinheit bildet. Der Gehäusedeckel 37 ist mit dem Gehäuseboden 1 des Lenkwinkelsensors verrastet, was mittels der Rastfedern 40 (siehe Fig. 2,5,6) geschieht. Innerhalb des Gehäuses für den Lenkwinkelsensor ist am Gehäuseboden dieses Sensors eine Code-Scheibe 2 drehbar gelagert. Einzelheiten hierzu sind in der DE-A-196 01 964 geschildert. Für die vorliegende Erfindung wichtig ist aber, daß Transportlaschen 25,26 der Übertragungseinheit 27 nach unten ragend in Transportösen 5,6 der Code-Scheibe eingreifen und diese im Sinne einer Drehbewegung des Gehäusedeckels 43 drehend antreiben. Wichtig für die Erfindung ist weiterhin, daß die breite Lasche 26 erheblich nach unten über den Gehäuseboden 1 des Lenkwinkelsensors vorspringt. Das Ziel dieser Maßnahme besteht darin, mit Hilfe des freien Endes der Lasche 26 noch einen nicht dargestellten Rückstellnocken eines an den Gehäuseboden 1 angefügten Lenkstockschalters anzutreiben, so daß durch die Antriebsstifte 44 des Gehäusedeckels 23 nicht nur die Code-Scheibe des Lenkwinkelsensors, sondern auch der Rückstellnocken des nicht dargestellten Lenkstockschalters betätigt wird. In dem vorliegenden Ausführungbeispiel wird der nicht dargestellte Lenkstockschalter in einfacher Weise durch eine Schraubverbindung mit dem Gehäuse des Lenkwinkelsensors 42 verbunden. Hierzu dienen die beiden Schraublöcher 50, die beispielsweise vom Lenkrad ausgehende Schrauben aufnehmen, welche mit dem nicht dargestellten Gehäuse des Lenkstockschalters verschraubt werden. Selbstverständlich liegt es im Rahmen der Erfindung, auch das Schaltergehäuse mit dem Gehäuse des Lenkstockschalters oder dem Boden der Übertragungseinheit 27 zu verrasten. Zur Zentrierung und Verrastung des Deckels des nicht dargestellten Lenkstockschalters dienen Zentrierstifte 53 und Rastlappen 54.

Eine weitere Integrationsmöglichkeit besteht darin, daß an den Gehäusedeckel 43 der Übertragungseinheit 27 die zur Drebwinkelbestimmung des Lenkrades notwendigen Spuren, wie beispielsweise die Code-Spur 31 und/oder die Inkrementalspur 32 angeformt sind. Der Gehäusedeckel 43 der Übertraguhgseinheit wird damit gleichzeitig als Code-Scheibe wirksam, so daß hierbei der Aufbau einer gesonderten Code-Scheibe entfallen kann. Vielmehr wird in diesem Falle der Deckel 43 der Übertragungseinheit 27 drehbar gegenüber dem Gehäuseboden 1 des Lenkwinkelsensors angeordnet. Dabei kann der Deckel 43 in der gleichen Art wie die Code-Scheibe 2 an dem Gehäuseboden 1 drehbar gelagert sein. Es kann u.U. aber auch die weiter oben beschriebene drehbare Lagerung des Gehäusedeckels 43 gegenüber dem Gehäusedeckel 37 des Lenkwinkelsensors beibehalten werden. Bei der hier beschriebenen Konstruktion kann u.U. auch der nicht drehbare Gehäusedeckel 37 des Lenkwinkelsensors entfallen, so daß sich das Gesamtgehäuse der Einheit aus Übertragungseinheit und Lenkwinkelsensor im wesentlichen aus dem drehbaren Gehäusedeckel 43 mit Code-Spuren und dem Gehäuseboden 1 des Lenkwinkelsensors zusammensetzt. Ein Teil des so umschlossenen Raumes wird dann für die Aufgaben der Übertragungseinheit, z.B. für die Aufnahme einer Wickelfeder oder für Kontaktbahnen und zugeordneten Schleifkontakten benötigt. Auch bei dieser integrierten Ausgestaltung kann, wie weiter oben schon geschildert, der Lenkstockschalter angebaut werden, indem beispielsweise der Gehäuseboden des Lenkwinkelsensors den Gehäusedeckel für den Lenkstockschalter bildet.

## Patentansprüche

1. An den Lenkstock und/oder das Lenkrad eines Kraftfahrzeugs anbaubare integrierte Baugruppe mit zwei im Wesentlichen die Form von hohlen Ringkörpern aufweisenden Baneinheiten, wobei die Gehäuseteile eines zur Bestimmung des Lenkwinkels eines Fahrzeugs dienenden Lenkwinkelsensors (42) mit den Gehäuseteilen (43) einer zur sicheren Übertragung eines Stromes von einer chassisfesten Stromquelle zu einem drehbaren Lenkrad dienenden Stromübertragungseinheit (27) gegeneinander verschachtelt aufgebaut sind, **dadurch gekennzeichnet, daß** der Gehäusedeckel (37) einer der beiden Baueinheiten ein separates Banteil bildend zugleich zumindest einen Teil des Gehäusebodens der anderen Baueinheit (27) bildet.

2. Baugruppe nach Anspruch 1, **dadurch gekennzeichinet, daß** der Gehäusedeckel (beispielsweise 43 oder 37) mit dem zugehörigen Gehäuseboden (z.B. 37 bzw. 1) verrastet ist.

3. Baugruppe nach Anspruch 1 oder 2, **dadurch gekennzeichnet, daß** in dem Gehäuseboden (1) des Lenkwinkelsensors (27) eine Code-Scheibe (2) drehbar verrastet ist, wobei die Code- Scheibe mindestens eine in die ringförmige Öffnung (22,23) der Baueinheiten (27,42) ragende Transportöse (5,6) aufweist, in die zum Zweck des Antriebs eine Transportlasche (25,26) des von dem Lenkstock angetriebenen Gehäusedeckels (43) ragt, wobei dieser Dekkel zumindest indirekt durch das Lenkrad verdrehbar ist.

4. Baugruppe nach einem der vorangegangenen Ansprüche, **dadurch gekennzeichnet, daß** das Gehäuse eines Lenkstockschalters unterhalb der Baugruppe (27,42) aus Sensor- und Übertragungseinheit integriert eingefügt ist.

5. Baugruppe nach einem der vorangegangenen Ansprüche, **dadurch gekennzeichnet, daß** mindestens zwei Baueinheiten (Schaltnocken, Lenkstockschalter 2,42) durch ein mit dem Lenkrad gekoppeltes Antriebssegment (26) gemeinsam betätigt werden.

6. Baugruppe nach einem der Ansprüche 1 bis 5, **dadurch gekennzeichnet, daß** der Gehäusedeckel (43) der Übertragungseinheit (27) als Code-Scheibe (2) ausgestattet ist und die zur Drehwinkelbestimmung des Lenkrades benötigten Spuren, wie Inkrementalspur (32) und/oder Code-Spur (31) trägt.

## Claims

1. An integrated subassembly installable on the steering column and/or steering wheel of an automotive vehicle, the subassembly having two building units having essentially the shape of hollow ring like bodies, wherein the housing parts of a steering angle sensor (42), serving to determine the steering angle of a vehicle, and the housing parts (43) of an electric power transmission unit (27), serving to safely transmit electric power from an electric power source arranged fast with the chassis to a rotatable steering wheel, are designed so as to be nested relative to each other, **characterized in that** the housing lid (37) of one of the two building units, being a separate part, simultaneously forms at least one part of the housing bottom of the other building unit (27).

2. A subassembly according to claim 1, **characterized in that** the housing lid (e.g., 43 or 37) being connected with the associated housing bottom (e.g., 37 or 1, respectively) by way of clicking-in.

3. A subassembly according to claim 1 or 2, **characterized in that** a code disk (2) is rotatably clicked in into the housing bottom (1) of the steering angle sensor (27), wherein the code disk having at least one transport loop (5, 6) projecting into the annular aperture (22, 23) of the building units (27, 42) into which loop (5, 6) a transport tongue (25, 26) of the steering-column-driven housing lid (43) projects for driving purposes, wherein this lid being rotatable at least indirectly by the steering wheel.

4. A subassembly according to one of the preceding claims, **characterized in that** the housing of a steering column switch is integrally inserted beneath the subassembly (27, 42) of sensor unit and transmission unit.

5. A subassembly according to one of the preceding claims, **characterized in that** at least two building units (switching cam, steering column switch 2, 42) are jointly actuated by one drive segment (26) coupled to the steering wheel.

6. A subassembly according to one of claims 1 to 5, **characterized in that** the housing lid (43) of the transmission unit (27) is designed as code disk (2) and carries the tracks, such as incremental track (32) and/or code track (31), needed for the determination of the angle of rotation of the steering wheel.

## Revendications

1. Module intégré pouvant être monté sur la colonne de direction et/ou sur le volant d'un véhicule automobile, comportant deux unités de construction possédant essentiellement la forme de corps annulaires creux, dans lequel les parties du boîtier d'un capteur (42) de l'angle de braquage, servant à déterminer l'angle de braquage d'un véhicule, sont agencées en étant imbriquées réciproquement avec les parties (43) du boîtier d'une unité de transmission de courant (27) servant à transmettre de façon sûre un courant d'une source de courant solidaire du châssis à un volant pouvant tourner, **caractérisé en ce que** le couvercle (37) du boîtier de l'une des deux unités de construction constituant un composant séparé forme simultanément au moins une partie du fond du boîtier de l'autre unité de construction (27).

2. Module selon la revendication 1, **caractérisé en ce que** le couvercle du boîtier (par exemple 43 ou 37) est encliqueté avec le fond de boîtier associé (par exemple 37 ou 1).

3. Module selon la revendication 1 ou 2, **caractérisé en ce qu'**un disque de code (2) est encliqueté de manière à pouvoir tourner dans le fond (1) du boîtier du capteur (27) de l'angle de braquage, le disque de code comportant au moins un oeillet de transport (5, 6), qui pénètre dans une ouverture de forme annulaire (22, 23) des unités de construction (27, 42) et dans lequel à des fins d'entraînement, pénètre une patte de transport (25, 26) du couvercle de boîtier (43), entraîné par la colonne de direction, ce couvercle pouvant être entraîné en rotation d'une manière au moins indirecte au moyen du volant.

4. Module selon l'une des revendications précédentes, **caractérisé en ce que** le boîtier d'un commutateur de colonne de direction est inséré en étant intégré au-dessous du module (27, 42) constitué par l'unité de capteur et l'unité de transmission.

5. Module selon l'une des revendications précédentes, **caractérisé en ce qu'**au moins deux unités de construction (becs de commutation, commutateurs de colonne de direction 2, 42) sont actionnées en commun par un segment d'entraînement (26) qui est couplé au volant.

6. Module selon l'une des revendications 1 à 5, **caractérisé en ce que** le couvercle (43) du boîtier de l'unité de transmission (27) est équipé en tant que disque de code (2) et porte les pistes, qui sont nécessaires pour la détermination de l'angle de braquage du volant, comme par exemple une piste incrémentale (32) et/ou une piste de code (31).
